Europäisches Patentamt

European Patent Office

Office européen des brevets

(19)

(11) Veröffentlichungsnummer: **0 236 540**
**B1**

(12) **EUROPÄISCHE PATENTSCHRIFT**

(45) Veröffentlichungstag der Patentschrift:
04.04.90

(51) Int. Cl.⁴: **G01B 5/00**

(21) Anmeldenummer: **86110454.5**

(22) Anmeldetag: **29.07.86**

(54) **Vorrichtung zur temperaturabhängigen Messpunktverstellung zweier Maschinenteile.**

(30) Priorität: **13.02.86 DE 3604550**

(43) Veröffentlichungstag der Anmeldung:
**16.09.87 Patentblatt 87/38**

(45) Bekanntmachung des Hinweises auf die Patenterteilung:
**04.04.90 Patentblatt 90/14**

(84) Benannte Vertragsstaaten:
**CH DE FR GB IT LI**

(56) Entgegenhaltungen:
**EP-A- 0 126 888**
**DE-A- 3 116 827**
**DE-A- 3 320 529**
**US-A- 2 727 796**

(73) Patentinhaber: **MAHO Aktiengesellschaft,
Postfach 1280 Tiroler Strasse 85, D-8962 Pfronten(DE)**

(72) Erfinder: **Babel, Werner, Achweg 19,
D-8962 Pfronten-Meilingen(DE)**

(74) Vertreter: **Patentanwälte Beetz sen. - Beetz jun. Timpe -
Siegfried - Schmitt-Fumian, Steinsdorfstrasse 10,
D-8000 München 22(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Vorrichtung zur temperaturabhängigen Meßpunktverstellung zweier relativ bewegbarer Maschinenteile der im Oberbegriff des Patentanspruchs 1 angegebenen Gattung.

Ein die Genauigkeit von relativen Verschiebebewegungen zweier Maschinenteile beeinflussendes Phänomen liegt in der Wärmedehnung der Maschinenteile bei Temperaturänderungen, wie sie beispielsweise im Anfahrbetrieb von Werkzeugmaschinen auftreten. Derartige Erwärmungen werden in erster Linie durch Lagerreibung der in den jeweiligen Maschinenteilen umlaufenden Bauelemente, wie z.B. der Arbeitsspindel und deren Antriebswellen im Spindelstock einer Werkzeugmaschine, erzeugt. Da die wirksame Länge der jeweils benutzten Maßstäbe dem maximalen Vorschubweg des bewegbaren Maschinenteils entspricht, die erwärmten Maschinenteile jedoch häufig länger als dieser maximale Fahrweg sind, führen diese Temperaturänderungen zu unerwünschten Nullpunkt-Verschiebungen des Maßstabs. Diese nachteiligen Wirkungen treten besonders bei programmgesteuerten Werkzeugmaschinen mit horizontal verfahrbarem Spindelstock auf, bei denen der Maßstab am Spindelstock und ein Lesekopf am Ständer befestigt sind. Die Programmsteuerung dieser Maschinen ist so ausgelegt, daß ihr Lagesteuerkreis unerwünschte Relativbewegungen zwischen dem den Maßstab tragenden Spindelstock und dem ortsfesten Lesekopf erfaßt und kompensiert. Wenn jedoch die Wärmedehnungen des Spindelstocks selbst und der im Spindelstock gelagerten Spindel unterschiedliche Werte aufweisen, kann der Lesekopf diese Unterschiede nicht erfassen, so daß dem Lagesteuerkreis entsprechend mit Fehlern behaftete Daten zugeführt werden. Gleiches gilt grundsätzlich auch für den Fall, daß an der Stirn des Spindelstocks ein Vertikalfräskopf angebaut ist, dessen Wärmedehnung nicht erfaßt werden kann.

Aus der DE-PS 3 106 701 ist eine Meßeinrichtung für Werkzeugmaschinen mit selbsttätiger Temperaturkompensation bekannt, bei welcher die durch Wärmedehnungen verursachten Meß- und Bearbeitungsungenauigkeiten praktisch dadurch vermieden werden, daß ein Dehnstab aus einem Material mit hohem Wärmedehnungskoeffizienten achsparallel zum Spindelstock angeordnet und mit seinem hinteren Ende am Spindelstock sowie mit seinem vorderen Ende am Maßstab befestigt ist, wobei die Wärmedehnung des Dehnstabes etwa gleich der Wärmedehnung des Spindelstockes sein soll. Bei einer durch Erwärmung hervorgerufenen Längung des Spindelstockes erwärmt sich auch der in direktem Kontakt am Spindelstock anliegende Dehnstab, dessen sich nach vorn verlängerndes Ende den daran befestigten Maßstab mitnimmt. Aufgrund der unterschiedlichen Wärmedehnungskoeffizienten zwischen Dehnstab und Spindelstock entspricht die Längung des Dehnstabes der Wärmeausdehnung des gesamten Spindelstocks in Längsrichtung incl. eines ggf. stirnseitig angebauten Vertikalfräskopfes. Obgleich dieses bekannte Meßsystem sich in der Praxis als funktionsfähig erwiesen hat, ergaben sich doch noch gewisse Meßfehler, welche auf die Anordnung des Dehnstabes an der Außenfläche des Maschinenteils, d.h. des Spindelstockes, zurückzuführen waren. Insbesondere im Anfahrbetrieb ergaben sich Meßfehler aufgrund einer verzögerten Wärmeübertragung von den thermisch besonders hochbeanspruchten inneren Bauteilen zum Maßstab hin.

Zur weiteren Verbesserung der Meßgenauigkeit ist es aus der DE-PS 3 116 827 bekannt, in dem den Dehnstab tragenden Maschinenteil einen Wärmeleitbolzen mit besonders hoher Wärmeleitfähigkeit axial verschiebbar anzuordnen, und zwar in einem Abschnitt dieses Maschinenteils, z.B. in einem Lagerabschnitt, der der Erwärmung in besonderem Maße ausgesetzt ist. Der Wärmeleitbolzen dieser bekannten Vorrichtung stellt gewissermaßen eine Wärmebrücke zwischen den schnellerwärmten Zonen im Inneren des Maschinenteils und dem Wärmeleitstab dar, was eine beschleunigte Erwärmung des Dehnstabes und damit seine entsprechende Längung zur Folge hat. Auch diese verbesserte Vorrichtung mit Kompensation der Wärmedehnung kann die sehr hohen Genauigkeitsansprüche moderner Werkzeugmaschinen noch nicht voll erfüllen, weil die Längung des Dehnstabes und damit die Mitnahmebewegung des Maßstabes nach wie vor von der Außentemperatur des Maschinenteils bestimmt werden. Insbesondere können die im Inneren des bewegten Maschinenteils herrschenden Temperaturen nicht erfaßt und berücksichtigt werden, was bei Spindelstöcken zur Folge hat, daß die Längung der im Spindelstock gelagerten Arbeitsspindel incl. ihrer Spindelhülsen aufgrund der im Inneren herrschenden höheren Temperaturen größer als die Wärmedehnung des Spindelstocks selbst ist. Die sich dadurch ergebenden Meßfehler lassen sich nicht kompensieren und müssen in Kauf genommen werden.

Schließlich ist aus der EP-A O 126 888 eine Einrichtung zum Messen der Relativlage zweier Maschinenteile mit Kompensation thermischer Längenänderungen bekannt, bei dem ein Maßstab und ein Dehnstab achsparallel nebeneinander an einer Seitenfläche des beweglichen Maschinenteils, in diesem Fall eines Spindelstocks, angeordnet sind und mit ihrem jeweils vorderen Ende an je einem Schenkel eines doppelarmigen Schwenkelements angreifen. Das achsparallel zum Maßstab angeordnete Dehnelement besteht aus einem Material mit hohem Wärmedehnungskoeffizienten, so daß es sich bei einer bestimmten Betriebserwärmung des ersten Maschinenteils stärker als dieses ausdehnt und eine Drehbewegung des Schwenkelementes bewirkt, die in eine entsprechende Verschiebebewegung des Maßstabs umgesetzt wird. Das Schwenkhebellager am beweglichen Maschinenteil kann verstellt werden, um das Übersetzungsverhältnis der Schwenkbewegungen zu ändern. Da bei dieser bekannten Vorrichtung alle Bauteile in unmittelbarem Berührungskontakt mit dem ersten Maschinenteil stehen, sind sie auch den Wärmeeinflüssen ausgesetzt, was die Meßgenauigkeit beeinflußt.

Aufgabe der Erfindung ist es, eine gattungsgemäße Vorrichtung zur temperaturabhängigen Meßpunktverstellung zweier relativ bewegbarer Maschinenteile zu schaffen, mit der eine verbesserte Kompensation von unterschiedlichen Wärmedehnungen dieser Maschinenteile bzw. der in ihnen eingebauten Elemente erreicht wird.

Diese Aufgabe wird erfindungsgemäß durch die kennzeichnenden Merkmale des Patentanspruchs 1 gelöst.

Bei der erfindungsgemäßen Vorrichtung werden die Wärmedehnungen des besonders schnell und intensiv erwärmten Querbolzens über den Winkelhebel in Längsverschiebungen des Maßstabs umgesetzt, wobei die Wärmedehnung des Querbolzens durch einen entsprechenden Übersetzungsfaktor des Winkelhebels in eine den jeweiligen Umständen angepaßte Verstellbewegung des Maßstabs transferiert wird. Da das innere Ende des Querbolzens vorteilhaft in den am höchsten erwärmten Zonen des Maschinenteils liegt, können auch die in diesen Bereichen herrschenden Temperaturen berücksichtigt und die dadurch verursachten Längungen z.B. einer Arbeitsspindel mit einer Pinole berücksichtigt werden. Dabei muß das Material des Querbolzens hinsichtlich seines Wärmedehnungskoeffizienten nicht auf den Werkstoff und damit die Wärmedehnung des Maschinenteils, d.h. des Spindelstocks, genau abgestimmt werden, wie dies bei Verwendung eines an der Seitenwand des Spindelstocks befestigten Dehnstabes und weiterer Übertragungselemente der Fall ist. Die Festlegung des Maßstabes am beweglichen ersten Maschinenteil mittels der Blattfedern sichert eine ständig wirksame Rückstellkraft des Maßstabs und einen freien Abstand zum Spindelstock, der ohne zusätzliche Bauteile eine effektive Wärmeisolierung des Maßstab gegenüber dem erwärmten ersten Maschinenteil bewirkt.

Zweckmäßige Ausgestaltungen der Erfindung sind Gegenstand der abhängigen Patentansprüche.

Im folgenden werden Ausführungsbeispiele der Erfindung anhand der Zeichnung im einzelnen beschrieben. Es zeigen:

Fig. 1 schematisch eine Vorrichtung zur temperaturabhängigen Meßpunktverstellung am Spindelstock einer Fräsmaschine;

Fig. 2 schematisch eine andere Ausführung der Meßwert-Verstellvorrichtung.

Fig. 3 schematisch eine weitere Ausführung mit einem Bimetall-Element.

In einem Spindelstock 1 ist eine Spindel 2 drehbar gelagert. Im Bereich des Spindellagers 3 ist im Spindelstock 1 eine Querbohrung 4 ausgebildet, in welcher ein Querbolzen 5 aufgenommen ist. Das innere Ende dieses Querbolzens 5 liegt direkt an der äußeren Lagerschale des Spindellagers 3 an oder ist auf andere Weise, z.B. durch einen Gewindeabschnitt, in der Bohrung festgelegt. Der im übrigen axial verschiebbar in der Bohrung 4 aufgenommene Bolzen 5 ragt mit seiner Spitze aus der Bohrung 4 heraus und drückt gegen den horizontalen Schenkel 6 eines Winkelhebels 7, welcher in seinem Winkel um eine horizontale Achse 8 schwenkbar in einem am Spindelstock 1 befestigten Bock 9 gelagert ist. Der in der Zeichnung vertikale Schenkel 10 des Winkelhebels 7 liegt ständig an einem Druckstück 11 an, welches an der Innenfläche eines Maßstabs 12 befestigt ist. Dieser Maßstab 12 trägt an seiner Außenseite Markierungen 13, die von einem stationären Lesekopf 14 gelesen werden können. Der Maßstab 12 ist über zwei Blattfedern 15 am Spindelstock 1 befestigt, und zwar derart, daß ein ständiger Druckkontakt zwischen dem vertikalen Schenkel 10 des Winkelhebels und dem am Maßstab 12 befestigten Druckstück besteht.

Bei einer Erwärmung des Spindelstockes im Lagerbereich dehnt sich der Querbolzen 5 entsprechend seines Wärmedehnungskoeffizienten um einen der jeweiligen Temperatur entsprechenden Betrag aus und verschwenkt dabei den Winkelhebel 7, dessen in der Zeichnung vertikaler Schenkel 10 den Maßstab gegen die Kraft der Blattfedern 15 um einen entsprechenden Betrag horizontal verschiebt.

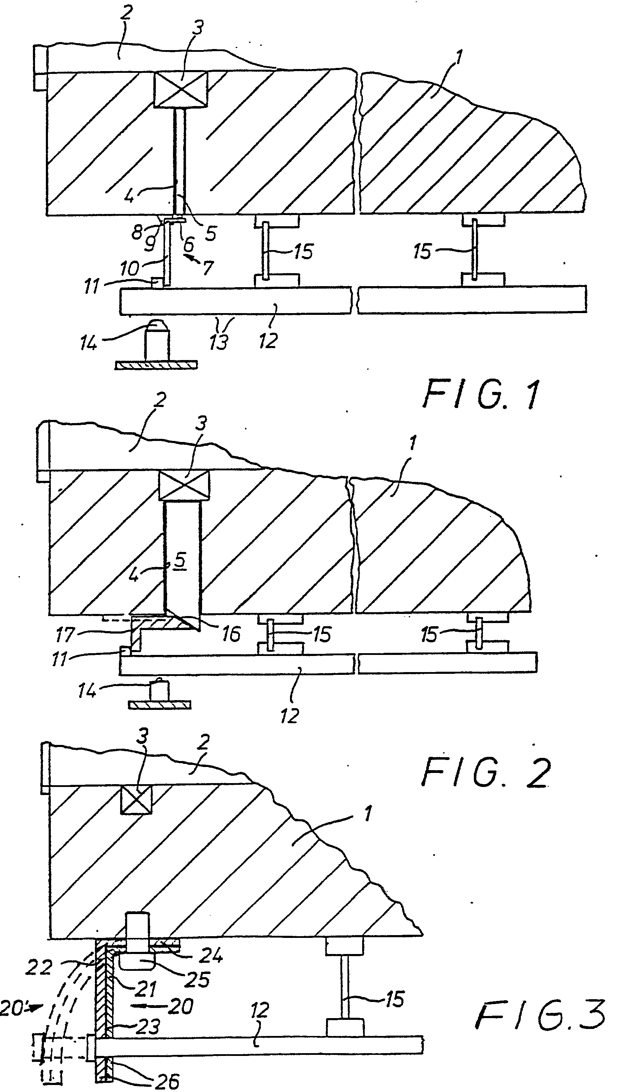

Die Ausführung nach Fig. 2 entspricht im wesentlichen derjenigen nach Fig. 1, wobei jedoch der Querbolzen 5 eine abgeschrägte Stirnfläche 16 hat, die an der entsprechend schrägen Endfläche eines Winkelhebels in Gestalt eines Schiebers 17 in ständigem Druckkontakt anliegt. Dieser Schieber 17 ist in gestrichelt angedeuteten Führungen am Spindelstock verschiebbar und drückt bei einer Längung des Bolzens 5 gegen das Druckstück 11 am Maßstab 12, der dadurch um einen entsprechenden Betrag horizontal verschoben wird. Auch bei dieser Ausführung ist der Maßstab 12 über die beiden Blattfedern 15 seitlich mit einem Zwischenabstand am Spindelstock befestigt, so daß die Wärmedehnungen des Spindelstockes nicht auf den somit wärmeisolierten Maßstab 12 übertragen werden.

Es sind auch verschiedene andere Systeme zur Umsetzung der Längung des Bolzens 5 in eine horizontale Verschiebebewegung des Maßstabs 12 möglich. So kann beispielsweise der Schieber 17 der Ausführung nach Fig. 2 durch einen zweiarmigen Schwenkhebel ersetzt werden, der an der Seitenfläche des Spindelstocks 1 drehbar gelagert ist und an seinem kürzeren Arm eine Schrägfläche oder eine Rolle aufweist, die mit federndem Druckkontakt an der Schrägfläche 16 des Querbolzens 5 anliegt. Zur Erzielung der notwendigen Übersetzung kann das längere Ende des Hebelarms am Druckstück 11 anliegen.

Ferner kann ein Bimetall-Element 20 als wirksames Organ des Umlenkgetriebes verwendet werden, wie es in Fig. 3 dargestellt ist. Dieses Bimetall-Element 20 ist ein Winkelprofil, das aus zwei L-förmigen Winkeln 21 und 22 besteht, die durch eine großflächige Lötverbindung 23 durchgehend und fest miteinander verbunden sind. Der äußere Winkel 22 kann z.B. aus Eisenblech und der innere Winkel 21 aus Messing bestehen. Der äußere Winkel 22 ist mit seinem einen Schenkel 24 unmittelbar am Spindelstock 1 durch einen Schraubbolzen 25 befestigt, und zwar an dem auf Temperaturänderungen empfindlich reagierenden vorderen Endteil des Spindelstocks 1. Am Ende des frei vorstehenden anderen Schenkels 26 des Bimetall-Elements 20 ist der Maßstab 12 mit seinem vorderen Ende befestigt. Ein bogenförmiges Bimetall-Element 20' ist in Fig. 3 gestrichelt dargestellt.

**Patentansprüche**

1. Vorrichtung zur temperaturabhängigen Meß-punktverstellung zweier relativ bewegbarer Ma-schinenteile, bestehend aus einem am ersten Ma-schinenteil längsverschiebbar befestigten Maß-stab, aus einem am zweiten Maschinenteil befestigten Lesekopf und aus mindestens einem Querbolzen aus einem Material mit hoher Wärmedehnung, der in einem der Erwärmung besonders ausgesetzten Abschnitt des ersten Maschinenteils angeordnet ist und zur Umsetzung der Wärmedehnungen in Längsverschiebungen des Maßstabes am vorderen Ende des Maßstabs angreift, dadurch gekennzeichnet, daß neben dem freien Ende des Querbolzens (4) am ersten Maschinenteil (1) ein Winkelhebel (7, 17, 20) angeordnet ist, dessen zum ersten Maschinenteil (1) paralleler Schenkel (6) am freien Ende des Querbolzens (5) angreift und dessen vom Maschinenteil (1) quer abstehender Schenkel (10) am vorderen Ende des Maßstabs (12) festgelegt ist, und daß der Maßstab (12) an den Enden von zwei quer vom ersten Maschinenteil (1) abstehenden Blattfedern (15) gehalten ist.

2. Vorrichtung nach Anspruch 1, dadurch gekennzeichnet, daß der Winkelhebel (7) an einem mit dem ersten Maschinenteil (1) fest verbundenen Bock (9) schwenkbar gelagert ist.

3. Vorrichtung nach Anspruch 1, dadurch gekennzeichnet, daß der Winkelhebel (17) in Längsführungen des ersten Maschinenteils (1) verschiebbar ist und am freien Ende des zum ersten Maschinenteil (1) parallelen Schenkels (16) eine Keilfläche aufweist, die mit einer am äußeren Ende des Querbolzens (5) vorgesehenen keilförmigen Gegenfläche zusammenwirkt.

4. Vorrichtung nach Anspruch 1, dadurch gekennzeichnet, daß der Winkelhebel (20) aus einem Bimetall besteht und mit seinem zum ersten Maschinenteil (1) parallelen Schenkel (24) mittels des Querbolzens (25) am ersten Maschinenteil (1) befestigt ist.

**Claims**

1. A device for the temperature-sensitive measuring point adjustment of two relatively movable machine parts consisting of a scale attached to the first machine part so that it can move longitudinally, a reading head attached to the second machine part, and at least one transverse bolt consisting of a material having a high thermal expansion which is disposed in a section of the first machine part which is particularly exposed to heat and engages at the front end of the scale to convert the thermal expansion into longitudinal displacement of the scale, characterised in that an angle lever (7, 17, 20) is disposed next to the free end of the transverse bolt (4) on the first machine part (1), the arm (6) of said lever parallel to the first machine part (1) engaging at the free end of the transverse bolt (5) and the arm (10) which projects transversely from the machine part (1) being attached to the front end of the scale (12) and in that the scale (12) is held at the ends by two leaf springs (15) projecting transversely from the first machine part (1).

2. Device in accordance with claim 1 characterised in that the angle lever (7) is pivotally mounted on a frame (9) rigidly connected to first machine part (1).

3. Device in accordance with claim 1, characterised in that the angle lever (17) can move in longitudinal guides of the first machine part (1) and has a wedge-shaped surface at the free end of arm (16) which is parallel to the first machine part (1), which surface co-operates with a wedge-shaped companion surface provided at the outer end of the transverse bolt (5).

4. Device in accordance with claim 1, characterised in that the angle lever (20) consists of a bimetal and is attached by means of the transverse bolt (25) to the first machine part (1) by its arm (24) which is parallel to the first machine part (1).

**Revendications**

1. Dispositif pour déplacer, en fonction de la température, le point de repère de deux parties de machine mobiles l'une par rapport à l'autre, constitué par une règle graduée fixée, avec possibilité de translation longitudinale, à la première partie de machine et par une tête de lecture fixée à la deuxième partie de machine, et par au moins une tige transversale qui est en une matière à forte dilatation thermique, est agencée dans une portion de la première partie de machine particulièrement exposée à l'échauffement, et attaque l'extrémité antérieure de la règle graduée, pour convertir les dilatations thermiques en déplacement longitudinaux de la règle graduée, caractérisé par le fait qu'à côté de l'extremité libre de la tige transversale (4), sur la première partie de machine (1), est agencé un levier coudé (7, 17, 20) dont la branche (6) parallèle à la première partie de machine (1) attaque l'extrémité libre de la tige transversale (5) et dont la branche (10) formant saillie transversalement à la partie de machine (1) est positionnée contre l'extrémité antérieure de la règle graduée (12), et par le fait que la règle graduée (12) est maintenue aux extrémités de deux ressorts à lame (15) formant saillie transversalement depuis la première partie de machine (1).

2. Dispositif selon revendication 1, caractérisé par le fait que le levier coudé (7) est monté à pivotement sur un support (9) solidarisé à la première partie de machine (1).

3. Dispositif selon revendication 1, caractérisé par le fait que le levier coudé (17) est mobile en translation dans des guides longitudinaux de la première partie de machine (1) et présente, à l'extrémité libre de la branche (16) parallèle à la première partie de machine (1), une surface en coin qui coopère avec une surface conjuguée, en forme de coin, prévue à l'extrémité extérieure de la tige transversale (5).

4. Dispositif selon revendication 1, caractérisé par le fait que le levier coudé (20) est constitué par un bimétal et, par sa branche (24) parallèle à la première partie de machine (1), est fixé à la première partie de machine (1) au moyen de la tige transver-sale (25).

FIG. 1

FIG. 2

FIG.3